Europäisches Patentamt

European Patent Office

Office européen des brevets

(19)

(11) Publication number: **0 478 802 A1**

## EUROPEAN PATENT APPLICATION
### published in accordance with Art. 158(3) EPC

(12)

(21) Application number: **91908475.6**

(22) Date of filing: **22.04.91**

(86) International application number:
**PCT/JP91/00529**

(87) International publication number:
**WO 91/16649 (31.10.91 91/25)**

(51) Int. Cl.5: **G02B 25/02**, A63F 9/24,
H04N 5/64

(30) Priority: **23.04.90 JP 43227/90 U**

(43) Date of publication of application:
**08.04.92 Bulletin 92/15**

(84) Designated Contracting States:
**DE FR GB**

(71) Applicant: **VIC TOKAI, LTD**
**74-3, Shiotsu**

**Yaizu-shi, Sizuoka-ken 425(JP)**

(72) Inventor: **SHIJO, Ikuo**
**2156-1, Kita**
**Shizuoka-shi, Shizuoka-ken 420(JP)**

(74) Representative: **Milhench, Howard Leslie et al**
**R.G.C. Jenkins & Co. 26 Caxton Street**
**London SW1H 0RJ(GB)**

(54) **AUXILIARY IMAGE-OBSERVING DEVICE FOR PORTABLE LIOUID CRYSTAL DISPLAY SYSTEM.**

(57) An auxiliary image-observing device for use in a portable liquid crystal display system or the like having a liquid crystal display housed in a manner to be visually observed from the outside, comprising: a magnifying lens for magnifying an image indicated on a liquid crystal display; a holding frame for fixedly holding the magnifying lens; and a holding member for positioning the magnifying lens to a liquid crystal display image in such a manner that the magnifying lens fixed on the holding frame is opposed to the liquid crystal display image and for detachably mounting the holding frame to a housing.

FIG. 1

## FILED OF THE INVENTION

The present invention relates to an image observing auxiliary instrument mounted on a portable liquid crystal display apparatus or the like for making it easy to see an image by enlarging the image or illuminating the same.

## BACKGROUND OF THE INVENTION

In recent years, a portable game set has been being put on the market. This type of portable game set is constructed by using a housing of approximately the same size as the size of a human hand and has in the housing various electronic circuits for playing a game and a liquid crystal display for displaying the contents of the game. This type of portable game set is so constructed that a game stored in a program cassette on which the contents of the game are recorded can be played by mounting the program cassette thereon, and is so constructed that various games can be played by replacing the program cassette with other program cassettes.

Meanwhile, the above described portable game set is of approximately the same size as that of a human hand so as to achieve portability. In addition, the size of a display screen of the liquid crystal display is reasonably made smaller than that of the housing. Accordingly, when a player continues to play a game for a long time, the significant burden is imposed on eyes of the player. Furthermore, since in this type of portable game set, the display screen is constructed using a liquid crystal, the portable game set cannot be used in a dark place from the nature of the liquid crystal.

Additionally, an image cannot be precisely seen unless the display screen constructed using a liquid crystal is arranged so as to be opposed to human eyes, that is, an image cannot be precisely grasped even when the display screen constructed using a liquid crystal is to be seen from the direction shifted by a relatively small angle from the direction perpendicular to the display screen. When the portable game set is used, therefore, the display screen of the liquid crystal display must be precisely opposed to eyes of a human being. Accordingly, when it is used for a long time, the human being is forced to assume a constant posture, so that the burden is imposed on the eyes also in terms of the point.

## OBJECT OF THE INVENTION

Accordingly, an object of the present invention is to provide an image observing auxiliary instrument used for a portable liquid crystal display apparatus having a liquid crystal display such as a portable game set, which makes it easy to see a screen of a liquid crystal display, for example, allows a liquid crystal display apparatus to be used in a relatively dark place and allows an image to be enlarged.

## DISCLOSURE OF THE INVENTION

In accordance with a wide aspect, the present invention provides an image observing auxiliary instrument used for a portable liquid crystal display apparatus comprising a housing having an opening formed in a part of its surface and a liquid crystal display contained in the housing such that it can be visually observed from the outside through the opening, which comprises a magnifying lens for enlarging an image reflected in the above liquid crystal display, a holding frame for fixedly holding the above magnifying lens, and a mounting member connected to the above holding frame for allowing the above magnifying lens to face an upper position of the liquid crystal display such that the above magnifying lens is opposed to the liquid crystal display as well as detachably mounting the above holding frame on the housing.

Furthermore, in accordance with another wide aspect, the present invention provides an image observing auxiliary instrument used for a portable liquid crystal display apparatus or the like comprising a housing having an opening formed in a part of its surface and a liquid crystal display contained in the housing such that it can be visually observed from the outside through the opening, which comprises a magnifying lens for enlarging an image reflected in the above liquid crystal display, a holding frame for fixedly holding the above magnifying lens, a mounting member connected to the above holding frame for allowing the above magnifying lens to face an upper position of the above liquid crystal display such that the magnifying lens is opposed to the liquid crystal display as well as detachably mounting the above holding frame on the housing of the above liquid crystal display apparatus, and illuminating means mounted on the above holding frame such that a screen of the liquid crystal display is made bright when the image reflected in the liquid crystal display is observed in an enlarged manner by the magnifying lens.

In the present invention, the image reflected in the liquid crystal display is enlarged by the magnifying lens fixed to the holding frame. Accordingly, the burden imposed on eyes of a user can be alleviated.

Furthermore, in the image observing auxiliary instrument provided with the illuminating means according to the present invention, the image reflected in the liquid crystal display can be illuminated by the illuminating means. Consequently, the image of the portable liquid crystal display apparatus or the like can be easily seen also in a dark place, thereby to make it possible to further enhance the convenience of a portable apparatus.

Additionally, the image observing auxiliary instrument according to the present invention is so constructed that the mounting member is detachably mounted on the housing of the portable liquid crystal display apparatus. Accordingly, the image observing auxiliary instrument according to the present invention can be mounted on the portable liquid crystal display apparatus or the like as required. Consequently, the portability of the portable liquid crystal display apparatus or the like is not degraded also in terms of this point.

It should be noted that the present invention is applicable to not only the above described portable game set but also a portable liquid crystal display apparatus in general of relatively small size having a liquid crystal display contained in its housing.

## BRIEF DESCRIPTION OF THE DRAWINGS

Fig. 1 is a perspective view for explaining a state where an image observing auxiliary instrument for a portable liquid crystal display apparatus or the like according to the present invention is used;

Fig. 2 is an exploded perspective view for explaining the state of the use shown in Fig. 1;

Fig. 3 is a central vertical sectional view showing the state of the use shown in Fig. 1;

Fig. 4 is a rear elevation showing a state where a back plate is detached in the image observing auxiliary instrument according to an embodiment;

Figs. 5A and 5B are vertical sectional views showing in two stages a state where a portable game set is mounted on the image observing auxiliary instrument according to the present embodiment;

Fig. 6 is a side view showing a state where the image observing auxiliary instrument according to the present embodiment is so folded that a holding frame is superimposed on a mounting member;

Fig. 7 is a perspective view for explaining a structure of a rotatably supporting portion;

Fig. 8 is a perspective view for explaining a modified example of the present invention; and

Fig. 9 is a side view for explaining another embodiment of the present invention, showing an example in which an image observing auxiliary instrument for a portable liquid crystal display apparatus according to the embodiment is rotatably mounted on a portable game set.

## BEST MODE FOR CARRYING OUT THE INVENTION

Description is now made of the present invention on the basis of embodiments as shown.

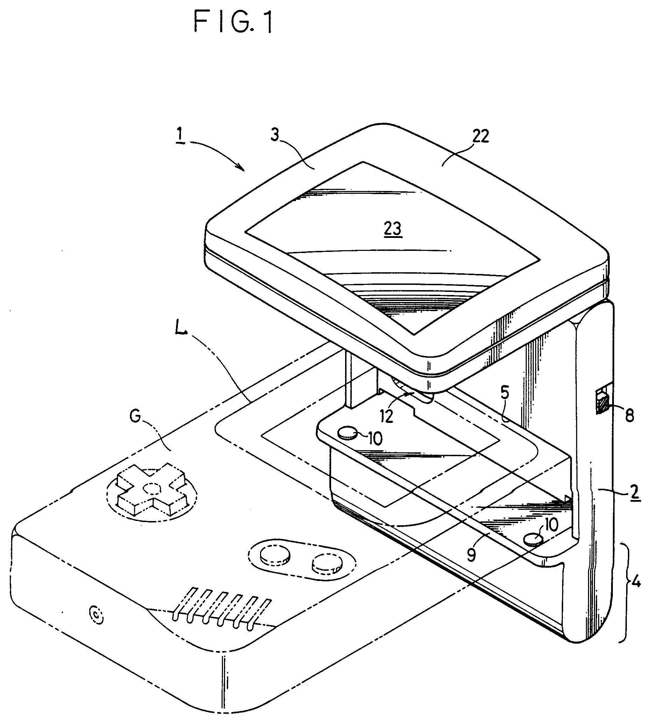

Fig. 1 is a perspective view showing a state where a portable game set as represented by an imaginary line is mounted on an image observing auxiliary instrument according to an embodiment of the present invention.

A screen of a liquid crystal video display L is arranged on the surface side of this portable game set G. The image observing auxiliary instrument 1 according to the present embodiment comprises a mounting member 2 for detachably mounting the portable game set G and a holding frame 3 rotatably mounted on an end of this mounting member 2. A magnifying lens 23 and an illuminating portion 24 serving as illuminating means are mounted on the holding frame 3, as described in detail later.

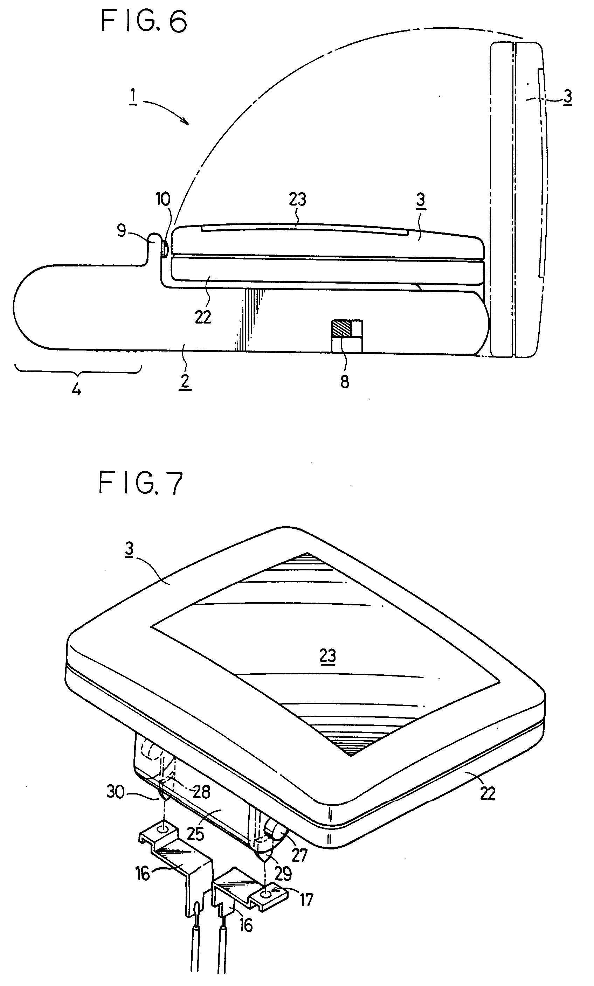

Meanwhile, the image observing auxiliary instrument 1 according to the present embodiment is used with the mounting member 2 being raised up as shown in Fig. 1. In the present specification, however, a state where the mounting member 2 is laid down as shown in Fig. 6 is defined as a basic state, and a surface on the upper side and a surface on the lower side in the basic state are respectively defined as an upper surface and a lower surface, for convenience of illustration. The following description is made in accordance with the definitions.

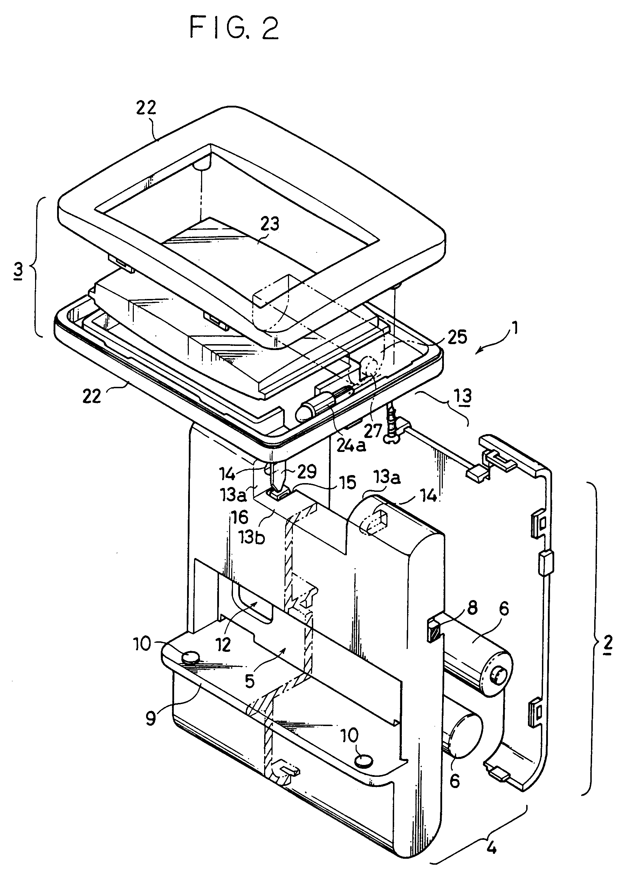

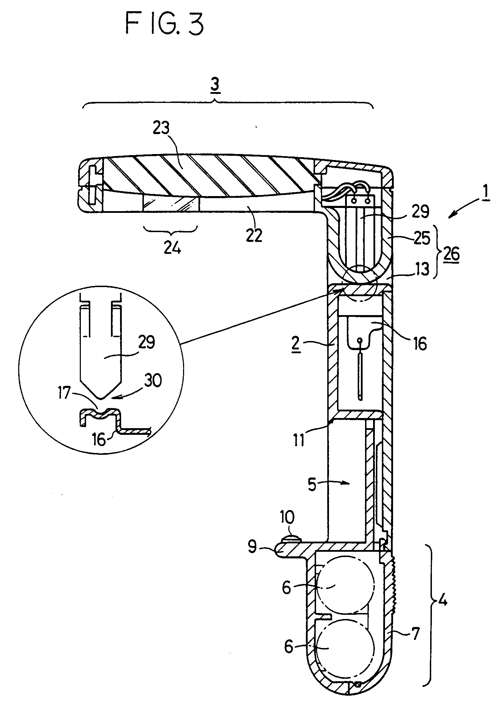

The mounting member 2 comprises a slightly long narrow flat plate-shaped member. As can be seen referring to Figs. 2 and 3 in addition to Fig. 1, a dry cell containing portion 4 having a little larger wall thickness outwardly is formed in an end of the mounting member 2 on the opposite side of the end in which the holding frame 3 is mounted. In addition, a recess portion 5 serving as a mounting portion for mounting the portable game set G is formed over the entire width of the mounting member around the center of the upper surface of the mounting member 2.

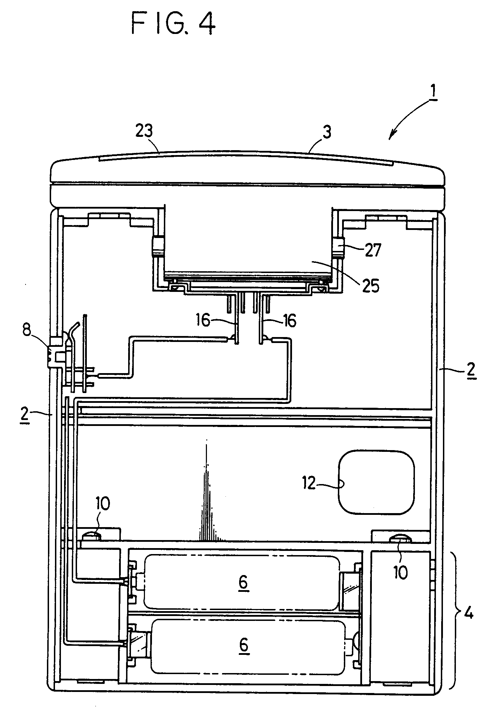

The dry cell containing portion 4 is a portion containing dry cells 6 (see Figs. 2 to 4) serving as the power supply of an illuminating portion as described later, and a dry cell cover 7 (see Fig. 3) is mounted on the lower surface of the mounting member 2 so as to allow the dry cells 6 to be replaced. In addition, an interconnection is stretched between the dry cells 6 and the illuminating portion as described later through the mounting member 2, and a power switch 8 is provided halfway on this interconnection and on the side surface of the mounting member 2.

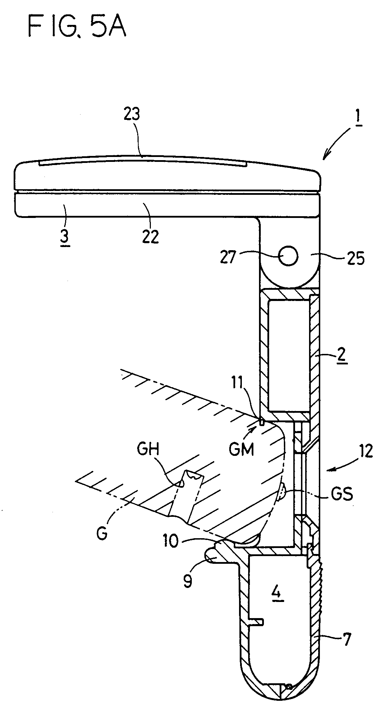

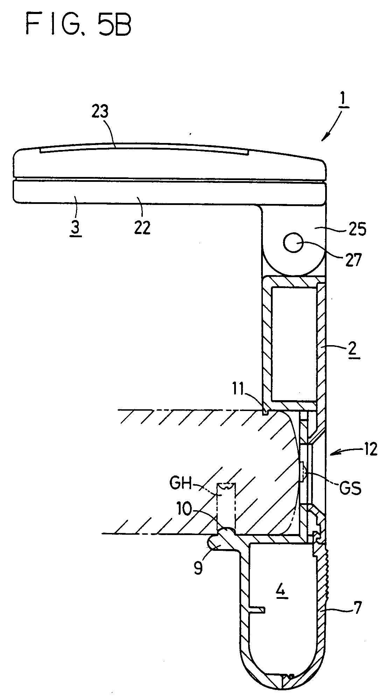

The above recess portion 5 is used for fixing the portable game set G with one end of the portable game set G being fitted therein, and a flat plate-shaped guide portion 9 is formed over the entire width of the mounting member 2 so as to be projected toward the upper surface of the mounting member 2 between the recess portion 5 and the dry cell containing portion 4. In addition, projections for engaging 10 are formed in the vicinity of upper ends of the guide portion 9 on the surface of the guide portion 9 on the side of the recess portion 5. On the other hand, an engaging portion 11 (see Fig. 3) over the entire width of the mounting member 2 is formed on the recess portion 5 on the side of the holding frame 3. As obvious from Fig. 5, the projection for engaging 10 is fitted in a hole for receiving a screw $G_H$ formed in the vicinity of one end on the reverse surface side of the portable game set G, while the engaging portion 11 is fitted in a groove portion $G_M$ formed in an upper end on the surface side of the portable game set G. The image observing auxiliary instrument 1 is so constructed as to be detachably mounted on the portable game set G by the structures.

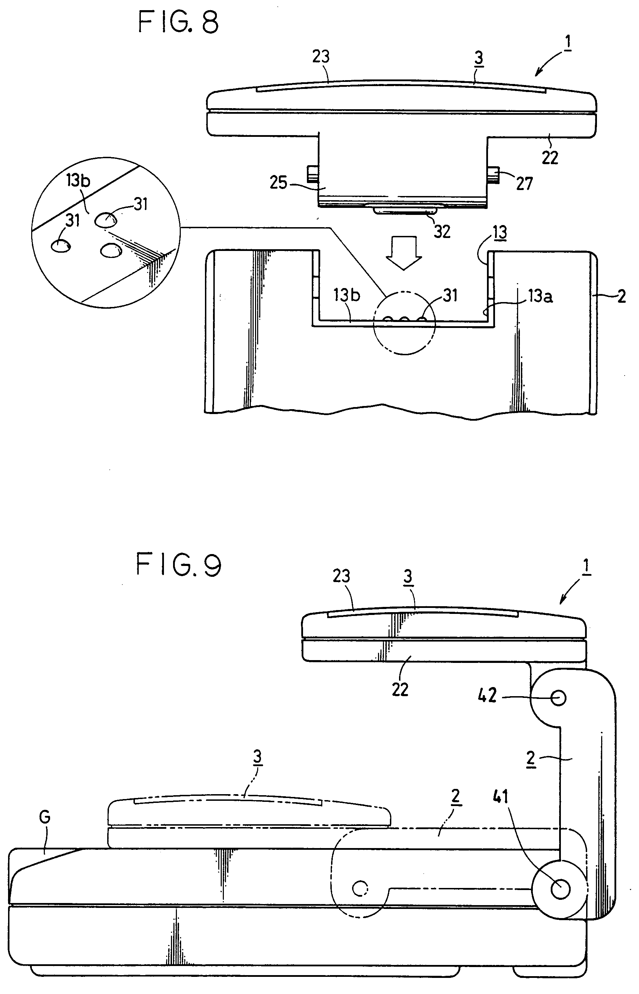

Meanwhile, the image observing auxiliary instrument according to the present invention need not be so constructed that it can be detachably mounted on the portable game set as described above. For example, as shown in Fig. 9, a pivotably supporting portion 41 serving as a mounting portion may be provided in one end of a mounting member 2, and the mounting member 2 may be rotatably mounted on the portable game set G by the pivotably supporting portion 41. In this case, a second pivotably supporting portion 42 is provided in the other end of the mounting member 2, and a holding frame 3 is rotatably connected to the mounting member 2 by the pivotably supporting portion 42. As represented by imaginary lines in Fig. 9, when the image observing auxiliary instrument is not used, the mounting member 2 is superimposed on the surface of the portable game set G and the holding frame 3 is also superimposed on the surface of the portable game set G. More specifically, the mounting member 2 and the holding frame 3 are arranged in an approximately horizontal direction, and the image observing auxiliary instrument 1 is mounted so as to cover the surface of the portable game set G.

On the other hand, when the image observing auxiliary instrument 1 is used, the mounting member 2 is raised up as represented by a solid line, and the holding frame 3 is moved so as to form an angle of approximately 90° with the mounting member 2 and fixed in the state. Meanwhile, an angle which the holding frame 3 forms with the mounting member 2 can be a desired angle by increasing the degree of friction between both the mounting member 2 and the holding frame 3 in the pivotably supporting portion 42 or so constructing both the mounting member 2 and the holding frame 3 that they are fixed to each other in such a relation as to form a constant angle, for example, 90°.

Turning to the embodiment shown in Figs. 1 to 8, a notch for a power switch 12 is formed on the left side of the recess portion 5. This allows a power switch $G_S$ provided on the left side of the surface of the portable game set G to face the lower surface of the mounting member 2 when one end of the portable game set G is fitted in the recess portion 5.

Furthermore, a notch for constituting rotary support 13 (see Fig. 2) is formed in an end of the mounting member 2 on the opposite side of the end in which the dry cell containing portion 4 is formed. This notch for constituting rotary support 13 is formed so as to be surrounded by two side surfaces 13a and an inner surface 13b connecting the side surfaces 13a, as shown in Fig. 2. Holes for rotation 14 are formed on both the side surfaces 13a, and slits 15 are formed in both ends of the inner surface 13b. In addition, a part of a metal terminal 16 provided inside of the mounting member 2 is exposed to a portion where the slit 1 is formed. A concave-shaped contact 17 is formed in a portion, which faces the notch for constituting rotary support 13, of the metal terminal 16.

Meanwhile, the metal terminal 16 and the above described dry cells 6 are electrically connected by a suitable electrical wire or the like inside of the mounting member 2.

A rectangular opening is formed in the holding frame 3, and a convex-shaped magnifying lens 23 is fixed to the opening. As obvious from Fig. 2, the holding frame 3 is constructed by overlapping frame members 22a and 22b with each other with the magnifying lens 23 being interposed therebetween. As obvious from Fig. 3, the holding frame 3 is provided with an illuminating portion 24 serving as illuminating means. In addition, as shown in Fig. 2, a rotary operating portion 25 is formed on the surface of the lower frame member 22b of the holding frame 3 on the same side as the illuminating portion 24. This rotary operating portion 25 and the above described notch for constituting rotary support 13 constitute a rotary portion 26.

The illuminating portion 24 has a structure in which a light bulb 24a (see Fig. 2) is arranged in a notched portion of the frame member 22b having a hollow structure and a transparent plastic plate covers the light bulb 24a. In addition, an axis of rotation 27 is projected in both ends of the rotary operating portion 25 and the axis of rotation 27 is fitted in the hole for rotation 14 of the notch for constituting rotary support 13, so that the holding frame 3 is rotatable with respect to the mounting member 2.

Although in the present embodiment, the holding frame 3 is rotatable with respect to the mounting member 2 as described above, the image observing auxiliary instrument according to the present invention may be so constructed that the holding frame 3 is fixed to the mounting member 2 in a state where it is so located as to form an angle of approximately 90° with the mounting member 2, as shown in Fig. 1. That is, the holding frame 3 may be fixed to the mounting member 2 so as to have an angle relation shown in Fig. 1.

Furthermore, as shown in Fig. 7, a slit 28 is formed in a forward end of the rotary operating portion 25, and a part of a metal terminal 29 provided inside of the rotary operating portion 25 is exposed to the slit 28. As obvious from the shapes of portions enlarged within a circle A in Fig. 3, a tip end of the metal terminal 29 is made thinner such that the metal terminal 29 is fitted in the concave-shaped contact 17 of the metal terminal 16 in the above notch for constituting rotary support 13, thereby to constitute a convex-shaped contact 30. The convex-shaped contact 30 is brought into contact with the concave-shaped contact 17 and fitted thereto in a state where the holding frame 3 forms an angle of approximately 90° with the mounting member 2, to be fixed in this position, as shown in Fig. 3. Consequently, in the image observing auxiliary instrument 1 according to the present embodiment, when the mounting member 2 and the holding frame 3 are so located as to form an angle of approximately 90° as described above, the convex-shaped contact 30 and the concave-shaped contact 17 are brought into contact with each other.

Meanwhile, the above described connecting structure of the mounting member 2 and the holding frame 3 may be replaced with a connecting structure shown in Fig. 8. More specifically, in Fig. 8, three small projections 31 are formed in an inner surface 13b of a notch for constituting rotary support 13, and the three small projections 31 are respectively arranged in positions to be vertexes of a triangle. On the other hand, an oblong projection 32 is formed in a forward end of a rotary operating portion 25, and the oblong projection 32 is fitted among the above small projections 31 so that a holding frame 3 is fixed in such a position that it forms an angle of 90° with a mounting member 2.

Turning to the embodiment shown in Figs. 1 to 7, a suitable interconnection is stretched between the metal terminal 29 and the light bulb 24a. Accordingly, in the above described state where the concave-shaped contact 17 and the convex-shaped contact 30 are brought into contact with each other, an electric circuit connecting the dry cells 6 and the light bulb 24a in series is constructed. Consequently, when the power switch 8 is turned on, the light bulb 24a is turned on. Accordingly, it is found that the rotary portion 26 has such a structure as to also have one type of switching function.

Description is now made of a method of using an image observing auxiliary instrument 1 for a portable game set or the like according to the above described embodiment.

First, the relation between the holding frame 3 and the mounting member 2 is fixed such that the holding frame 3 forms an angle of 90° with the mounting member 2 in a state where the power switch 8 is turned off. Then, one end of the portable game set G is inserted into the image observing auxiliary instrument 1. In the case of this insertion, the groove portion $G_M$ of the portable game set G is first engaged with the engaging portion 11, as shown in Fig. 5A. Then, the reverse surface in one end of the portable game set G is pushed along the guide portion 9 such that the engaging portion 11 is a central axis of rotation, so that the projection for engaging 10 is fitted in the hole for receiving a screw $G_H$ of the portable game set G. Thus, the portable game set G is fixed to the recess portion 5. In this state, the power switch $G_S$ of the portable game set G is so exposed that it can be operated from the notch for a power switch 12 of the image observing auxiliary instrument 1.

The image observing auxiliary instrument 1 is mounted on the portable game set G in the above described manner and then, the magnifying lens 23 is looked in in this state, thereby to make it possible to see the liquid crystal display L of the portable game set G in an enlarged state by the magnifying lens 23. Consequently, a user can easily play a game while viewing the enlarged image. Furthermore, when it is dark around, the screen can be made bright by the illumination from the illuminating portion 24 if the power switch 8 is turned on. When the user plays no game, the image observing auxiliary instrument 1 is detached from the portable game set G and the holding frame 3 is brought into a state where it is laid down as represented by a solid line in Fig. 6, the image observing auxiliary instrument 1 in a case where it is not used can be made small in shape. Moreover, even when it is forgotten that the power switch 8 is turned off, the electrical contact of the concave-shaped contact 17 with the convex-shaped contact 30 is released by bringing the above holding frame 3 into a state where it is laid down. Accordingly, the supply of power to the illuminating portion 24 is cut off, thereby to make it possible to prevent the dry cells 6 from being consumed.

Although in the construction of the above described embodiment, the illuminating portion 24 is constructed by arranging the light bulb 24a in the vicinity of one side edge of the holding frame (see Fig. 2), the illuminating portion may be constructed by arranging light bulbs in two or more side edges of the holding frame 3.

Furthermore, although in the above described embodiment, both the magnifying lens 23 and the illuminating portion 24 are fixed to the holding frame 3, either one of the magnifying lens and the illuminating portion may be provided for the holding frame.

Although the above described image observing auxiliary instrument 1 is applied to the portable game set, it is also applicable to other portable video display apparatuses comprising a video display, for example, a portable electronic computer, by suitably changing the structure of the recess portion 5.

**Claims**

1.  An image observing auxiliary instrument used for a portable liquid crystal display apparatus or the like comprising a housing having an opening formed in a part of its surface and a liquid crystal display contained in the housing such that it can be visually observed from the outside through the opening, which comprises:

    a magnifying lens for enlarging an image reflected in said liquid crystal display;

    a holding frame for fixedly holding said magnifying lens; and

    a mounting member connected to said holding frame for allowing the magnifying lens to face an upper position of said liquid crystal display such that said magnifying lens is opposed to said liquid crystal display as well as detachably mounting said holding frame on said housing.

2.  The image observing auxiliary instrument according to claim 1, wherein

    said magnifying lens has a plane shape having an area approximately equal to or larger than that of said liquid crystal display, and

    said holding frame has an opening in the same plane shape as that of said magnifying lens.

3.  The image observing auxiliary instrument according to claim 1, wherein said mounting member has a mounting portion for allowing said portable liquid crystal display apparatus to be mounted on the mounting member with a part thereof being engaged with the mounting member.

4.  The image observing auxiliary instrument according to claim 3, wherein said mounting member is provided with a rotatably supporting member for rotatably supporting said holding frame on the mounting member such that said holding frame can be superimposed on the mounting member at the time of folding and an angle which the magnifying lens fixed to said holding frame and the liquid crystal display form can be adjusted.

5.  The image observing auxiliary instrument according to claim 3, wherein the mounting portion of said mounting member is a recess portion which is provided in a position spaced apart from a portion, which supports said holding frame, of the mounting member by a predetermined distance and to and with which one end of said portable liquid crystal display apparatus in the vicinity of a portion containing the liquid crystal display is to be inserted and engaged.

6.  An image observing auxiliary instrument used for a portable liquid crystal display apparatus or the like comprising a housing having an opening formed in a part of its surface and a liquid crystal display contained in the housing so as to be visually observed from the outside through the opening, which comprises:

    a magnifying lens for enlarging an image reflected in said liquid crystal display;

    a holding frame for fixedly holding said magnifying lens;

    a mounting member connected to said holding frame for allowing the magnifying lens to face an upper position of said liquid crystal display such that said magnifying lens is opposed to said liquid crystal display as well as detachably mounting said holding frame on the housing of said liquid crystal display apparatus; and

    illuminating means mounted on said holding frame such that a screen of the liquid crystal display is made bright when the image reflected in said liquid crystal display is observed in an enlarged manner by the magnifying lens.

7.  The image observing auxiliary instrument according to claim 6, wherein said mounting member has a mounting portion for mounting said portable liquid crystal display apparatus on the mounting member with a part thereof being engaged with the mounting member.

8.  The image observing auxiliary instrument according to claim 7, wherein said mounting member is provided with a rotatably supporting member for rotatably supporting said holding frame on the mounting member such that said holding frame can be superimposed on the mounting member at the time of folding and an angle which the magnifying lens fixed to said holding frame and the liquid crystal display form can be adjusted.

9. The image observing auxiliary instrument according to claim 8, which further comprises dry cells for supplying power to said illuminating means,

said mounting member being provided with a dry cell containing portion for containing said dry cells.

10. The image observing auxiliary instrument according to claim 9, wherein said dry cell containing portion comprises a dry cell containing recess portion for containing dry cells and a dry cell cover for closing the dry cell containing recess portion,

said dry cell containing portion being formed in such a position as not to prevent said holding frame from being superimposed on said mounting member at the time of folding.

11. The image observing auxiliary instrument according to claim 10, which further comprises a power switch for turning the supply of power from said dry cells to said illuminating means on and off.

12. The image observing auxiliary instrument according to claim 11, wherein said power switch comprises

a first contact provided in said mounting member and formed related to the rotatably supporting portion of said mounting member for further supplying power from a power supply line through said power switch, and

a second contact formed in said holding frame so as to be opposed to said first contact and electrically brought into contact with said first contact when the holding frame is positioned to be brought into a state where it is used,

whereby the power from said dry cells is supplied to said illuminating means when said holding frame is positioned to be brought into a state where it is used.

13. The image observing auxiliary instrument according to claim 12, wherein the mounting portion of said mounting member is a recess portion which is provided in a position spaced apart from a portion, which supports said holding frame, of the mounting member by a predetermined distance and to and with which one end of said portable liquid crystal display apparatus in the vicinity of a portion containing the liquid crystal display is to be inserted and engaged,

14. An image observing auxiliary instrument used for a portable liquid crystal display apparatus or the like comprising a housing having an opening formed in a part of its surface and a liquid crystal display contained in the housing so as to be visually observed from the outside through the opening, which comprises:

illuminating means for allowing a screen of the liquid crystal display to be made bright when an image reflected in said liquid crystal display is observed;

a holding frame for fixedly holding said illuminating means; and

a mounting member connected to said holding frame for allowing an upper position of said liquid crystal display to be irradiated by illuminating light from the illuminating means as well as detachably mounting said holding frame on the housing of said liquid crystal display apparatus.

FIG. 1

# FIG. 2

F IG. 3

# FIG. 4

F I G. 5A

FIG. 5B

FIG. 6

FIG. 7

14

FIG. 8

FIG.9

# INTERNATIONAL SEARCH REPORT

**I. CLASSIFICATION OF SUBJECT MATTER** (if several classification symbols apply, indicate all) [6]

According to International Patent Classification (IPC) or to both National Classification and IPC

Int. Cl$^5$ G02B25/02, A63F9/24, H04N5/64

**II. FIELDS SEARCHED**

| Minimum Documentation Searched [7] | |
|---|---|
| Classification System | Classification Symbols |
| IPC | G02B25/00-25/02, A63F9/22-9/24, H04N5/64 |

Documentation Searched other than Minimum Documentation
to the Extent that such Documents are Included in the Fields Searched [8]

| | |
|---|---|
| Jitsuyo Shinan Koho | 1926 - 1990 |
| Kokai Jitsuyo Shinan Koho | 1971 - 1990 |

**III. DOCUMENTS CONSIDERED TO BE RELEVANT** [9]

| Category* | Citation of Document, [11] with indication, where appropriate, of the relevant passages [12] | Relevant to Claim No. [13] |
|---|---|---|
| Y | JP, U, 64-13028 (Sanyo Electric Co., Ltd.), January 24, 1989 (24. 01. 89), (Family: none) | 1-14 |
| Y | JP, U, 57-122981 (Sharp Corp.), July 31, 1982 (31. 07. 82), (Family: none) | 1-14 |
| Y | JP, U, 63-86616 (Matsushita Electric Works, Ltd.), June 6, 1988 (06. 06. 88), (Family: none) | 1-14 |
| Y | JP, Y1, 11-8734 (Isaku Nishimura), June 24, 1936 (24. 06. 36), (Family: none) | 1-14 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure. use. exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| May 14, 1991 (14. 05. 91) | May 20, 1991 (20. 05. 91) |
| International Searching Authority | Signature of Authorized Officer |
| Japanese Patent Office | |